(19) **Europäisches Patentamt**

**European Patent Office**

**Office européen des brevets**

(11) **EP 1 035 681 B1**

(12) **EUROPEAN PATENT SPECIFICATION**

(45) Date of publication and mention
of the grant of the patent:
**12.05.2004 Bulletin 2004/20**

(51) Int Cl.⁷: **H04L 1/00**, H04B 1/707

(21) Application number: **00301897.5**

(22) Date of filing: **08.03.2000**

(54) **Method for interference cancellation**

Interferenzunterdrückungsverfahren

Procédé de suppression des interférences

(84) Designated Contracting States:
**DE FR GB**

(30) Priority: **09.03.1999 FI 990509**

(43) Date of publication of application:
**13.09.2000 Bulletin 2000/37**

(73) Proprietor: **Nokia Corporation**
**02150 Espoo (FI)**

(72) Inventor: **Hottinen, Ari**
**02320 Espoo (FI)**

(74) Representative:
**Valkeiskangas, Tapio Lassi Paavali et al**
**Oy Kolster Ab,**
**Iso Roobertinkatu 23,**
**P.O. Box 148**
**00121 Helsinki (FI)**

(56) References cited:
**WO-A-96/11534**

• **KWON H-C ET AL: "TURBO CODED CDMA SYSTEM WITH AN INTERFERENCE CANCELLATION TECHNIQUE" IEICE TRANSACTIONS ON COMMUNICATIONS, INSTITUTE OF ELECTRONICS INFORMATION AND COMM. ENG. TOKYO, JP, vol. E81-B, no. 12, December 1998 (1998-12), pages 2326-2333, XP000827890 ISSN: 0916-8516**

**Description**

The invention relates to a method for interference cancellation in a data transmission system which uses a multiple access interference cancellation method in which estimates of interfering signals are subtracted from a desired signal.

In the design and implementation of data transmission systems, an essential problem is the simultaneous transmission and reception of signals of several concurrent users so that the signals cause as little interference to each other as possible. For this purpose and for the purpose of available transmission capacity, several different transmission protocols and multiple access methods have been created, the most common of which in particularly in mobile telephony are the FDMA and TDMA methods, and lately also the CDMA method.

CDMA is a multiple access method which is based on spread-spectrum technique and whose application in cellular radio systems has lately been initiated along with the earlier FDMA and TDMA. CDMA provides several advantages over the earlier methods, such as simplicity of frequency planning and spectral efficiency.

In a CDMA method, the narrow-band data signal of the user is multiplied by a spreading code of much wider bandwidth to a relatively wide band. Bandwidths used in known experimental systems include 1.25 MHz, 10 MHz and 25 MHz. In the multiplying process, the data signal spreads to the entire band used. All users transmit simultaneously using the same frequency band. Each connection between a base station and a mobile station uses its own spreading code, and the signals of the users can be distinguished from each other in the receivers on the basis of the spreading code of each user. The aim is to select the spreading codes so that they are mutually orthogonal, i.e. they do not correlate with each other.

The correlators or adapted filters provided in CDMA receivers implemented in a conventional way are synchronized with the desired signal which is identified on the basis of the spreading code. The data signal is returned in the receiver onto the original band by multiplying it by the same spreading code as in the transmission phase. The signals which have been multiplied by some other spreading code neither correlate nor return to the narrow band in an ideal case. They thus appear as noise from the point of view of the desired signal. The aim is thus to detect the signal of the desired user among several interfering signals. In practice, the spreading codes are not non-correlated, and the signals of other users complicate the detection of the desired signal by distorting the received signal. This interference caused by the users for each other is termed as multiple access interference.

A data transmission system employing TDMA multiple access method has several frequencies in use, each of which is divided into time slots in which the signals of the various users have been placed. Thus, each user has a time slot of his own. As the frequency range reserved for the system is usually limited, the same frequencies must be used in cells located a certain distance away. If high frequency efficiency is desired, this distance should be kept as small as possible. This results in different transmissions on the same frequencies interfering with each other. Consequently, an interfering signal is heard in the receiver in a certain time slot in addition to the desired signal, which interfering signal originates in some other connection using the same frequency.

The single user detection method described above in connection with CDMA is not optimum because, in connection with the detection, it disregards information contained in the signals of other users. In addition, the conventional detection is unable to correct errors caused partly by unorthogonal spreading codes and signal distortion on the radio path. An optimum receiver takes into consideration the information contained in the signals of all users, and thus the signals can be detected in an optimum manner by using, for example, a Viterbi algorithm. In the CDMA system, for example, an advantage of this detection method is that the situation, as far as the receiver is concerned, resembles a single user CDMA system in which the multiple access problem does not exist. For example, the near-far problem, typical of CDMA systems, does not occur. The term near-far problem refers to a situation where a transmitter close to the receiver covers the transmitters further away by its transmission. The most serious weakness of the Viterbi algorithm is that the computational capacity it requires increases exponentially as the number of users increases. For example, a system of ten users in which the bit rate is 100 kbit/s by QPSK modulation would require 105 million operations per second for calculating the Viterbi algorithm. In practice, this constitutes a bar to the implementation of an optimum receiver.

However, it is possible to approximate an optimum receiver by various methods. Prior art knows different kinds of methods for multiuser detection (MUD). The best-known methods include a linear multiuser detection, a decorrelating detector and a multistage detector. These methods are examined in closer detail in the references Varanasi, Aazhang: Multistage detection for asynchronous code division multiple access communications, IEEE Transactions on communications, vol. 38, pp. 509-519, Apr 1990, Lupas, Verdu: Linear multiuser detectors for synchronous code-division multiple access channels, IEEE transactions on Information Theory, vol 35, no. 1, pp 123-136, Jan 1989, and Lupas, Verdu: Near-far resistance of multiuser detectors in asynchronous channels, IEEE Transactions on communications, vol 38, Apr 1990. However, these methods are also associated with operations, such as matrix inversion operations, requiring a lot of computational capacity.

A second way for solving the problems caused by the multiple access interference is to use interference cancellation (IC) methods. In sequential IC type solutions, the purpose is to detect the users one by one, often in order of magnitude, so that the influence of the signals of users already detected is eliminated from the received signal prior to the detection of the subsequent user. As an example of such a solution, reference is made to the European Patent Publication 491668, applying the method described above in a CDMA cellular radio system. Interference cancellation methods are computationally more efficient than algorithms of the MUD type, but their performance is weaker particularly during poor reception conditions, such as a fading multipath channel, often having low signal levels.

Multiple access interference cancellation methods similar to the ones described above can also be applied to TDMA systems. They do, however, have the deficiency of a deteriorating performance in case the interfering signals have bad estimates. In the worst case, multiple access interference cancellation may even increase interference, if the interfering signals are subtracted on the basis of wrong estimates.

References WO 9611534 and Kwon H-C et al: "Turbo Coded CDMA System with an Interference Cancellation Technique", IEICE Transactions on communications, Institute of electronics information and comm.. eng. Tokyo, JP, vol. E81-B, no. 12, December 1998, pages 2326-2333, XP000827890 ISSN:0916-8516 present interference cancellation solutions with error correction or confidence coefficients.

A more efficient interference cancellation method than the ones mentioned above takes into account the confidence coefficients of the estimates. The group of subtracted signals is fixed, but a confidence coefficient between 0 and 1 is calculated for each signal. This improves interference cancellation, but increases complexity. The use of confidence coefficients increases the need for computational capacity too much.

The invention seeks to provide a method and an apparatus implementing the method which provide a solution to the above-mentioned problems.

This is achieved by the interference cancellation method of the invention, which method comprises multiple access interference cancellation from a desired signal and in which method a desired signal and group of signals causing interference to the desired signal are received, which signals are then detected and channel-decoded, and for which decoded signals error detection is performed, and at least some of the interfering signals are regenerated and the regenerated signals are subtracted from the desired signal which is re-detected. In the method of the invention, the regeneration and subtraction of the signals are performed on the basis of the error detection performed on the signals.

The method further comprises forming, at least for one signal, a channel estimate of the signal by using a regenerated or estimated signal, weighting the signal with the improved channel estimate and subtracting the weighted signal from the received signal.

In accordance with a second aspect of the present invention there is provided a receiver of a data transmission system, which receiver comprises means to detect and channel-decode a desired signal and group of signals causing interference to the desired signal, means to perform error detection on the signals, means to perform regeneration to at least some of the interfering signals, and means to subtract the regenerated signals from the desired signal. The receiver of the invention comprises means to control the regeneration and subtraction of the signals on the basis of the error detection performed on the signals.

The receiver is adapted to form, at least for one signal, a channel estimate of the signal by using a regenerated or estimated signal, weight the signal with the improved channel estimate and substract the weighted signal from the received signal.

The preferred embodiments of the invention are set forth in the dependent patent claims.
The method and receiver of the invention provide several advantages. The invention is based on the idea that by taking error detection into account in interference cancellation, the exactness of interference cancellation can be improved without increasing the computational capacity. To reduce the effect of the interference caused by the transmission path, a digital signal is coded to improve the reliability of the transmission link. Typically, both error-correcting codes and error-detecting codes (e.g. CRC) are used. Then, the errors caused by interference in the signal to be transmitted can often be corrected and the uncorrected errors detected. Conventional coding methods used in digital telecommunication include block coding and convolution coding and various chained coding methods (e.g. Turbo coding). In the solution of the invention, error-detecting coding is utilized in addition to error-correcting coding in making decisions related to interference cancellation.

The invention can also be used in receivers which calculate preliminary confidence coefficients by known technique, and they are improved with the method of the invention.

In the following the invention will be described in greater detail in connection with preferred embodiments with reference to the attached drawings, in which

Figure 1 shows an example of a data transmission system to which the solution of the invention can be applied,
Figure 2 shows a first example of the receiver of the invention, and
Figures 3 and 4 illustrate a second and third example of the receiver of the invention.

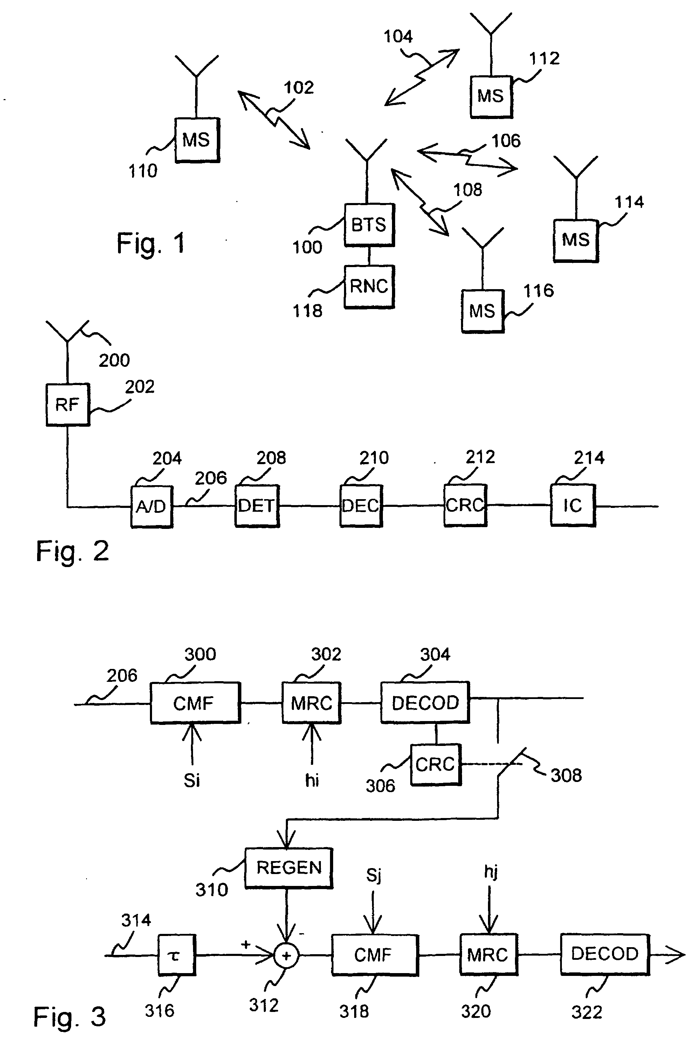

Figure 1 illustrates an example of a data transmission system to which the solution of the invention can be applied. The system comprises a base station 100 which is in radio contact 102 to 108 with several terminals 110 to 116 within its service area. The base station is also connected to a radio network controller 118 which controls the operation of one or more base stations and forwards the traffic of the base station elsewhere in the system. Let us assume for this example that this is a CDMA system. This does not, however, limit the invention in any way, as is obvious to those skilled in the art. Each terminal communicates simultaneously with the base station. Each terminal regards the signals of the other terminals as interfering signals. Thus, for instance for terminal 110, the desired signal is 102 and the interfering signals are 104 to 108. The same applies to the signal received by the base station. For each connection, the other signal connections received by the base station are interfering signals.

In general, the low-pass filtered signal received by the receiver can be represented by the equation

$$r_{m,n}(t) = S_n \sum_{k=-\infty}^{\infty} x_{n,k} q_{m,n}(t - kT) + n_{m,n}(t) \qquad (1)$$

in which

T is the duration of the signal,

S is the spreading code matrix of the users

$x_{n,k}$ is the source symbol of the nth user at a moment of time k and

$$q_{m,n}(t) = c_T(t-t_n) \otimes h_{m,n} \otimes c_R(t) \qquad (2)$$

comprises the convolutions of the impulse responses of a transmitter filter $c_T$, a multipath $h$ and a receiver filter $c_R$ on the diversity branch $m$ from the signal of user $n$.

The total signal received by the diversity branch $m$ is thus

$$r_m(t) = \sum_{n=0}^{N} r_{m,n}(t) + n_m(t), \qquad (3)$$

in which $N_m(t)$ denotes noise. N denotes the total number of signals. In the simplest case, diversity is not used, i.e. $m = 1$.

Let us assumed without affecting generality that the index of the desired user is zero, n=0. The method can correspondingly be applied to the other users (indexes). The interfering signal components are divided into two parts, dominant components Nd and noise components Nn, and thus the total number of signals N = Nd + Nn. In the receiver, an attempt is made for removing the influence of the dominant noise components Nd. The noise components comprise those interfering signal components that are weak as to their strength, and whose effect in interference cancellation may be ignored by considering them as noise-like interference. With these markings and assumptions, the total signal illustrated in the formula above (3) can now be presented in the form

$$r_m(t) = r_{m,0}(t) + \sum_{n=1}^{Nd} r_{m,n}(t) + \sum_{n=Nd+1}^{N} r_{m,n}(t) + n_m(t)$$
$$r_{m,0}(t) + I_{Nd} + I_{Nn} + n_m(t), \qquad (4)$$

in which

$I_{Nd}$ comprises the sum signal of the dominant interfering signal components and

$I_{Nn}$ comprises the sum signal of interfering signal components classified as noise components.

The receiver needs to detect the transmitted symbols $X_{n,k}$ from the received signal, which is illustrated by the above formula. If the interference components $I_{Nd}$ and $I_{Nn}$ are small, the reception can be carried out by conventional single user reception methods, as is done in the GSM system, for instance. As the co-channel interference increases, for instance as a result of reducing frequency re-use distances, more efficient methods will be required.

In the solution of the invention, interference cancellation is carried out by performing error detection on the received signals, and interference cancellation is controlled on the basis of the error detection. The interfering signals that have been received without errors are regenerated and subtracted from the desired signal by using hard decisions. It is not worth trying to regenerate and cancel the signals whose reception contained an error, because the desired end-result is then not achieved, and it is possible that the situation is made worse by regenerating a defective signal. The signals that do not pass the error detection can be subtracted by using a well-proven technique, such as subtraction weighted by a confidence coefficient. An error-detecting code and error detection performed with it makes it possible to prove the reliability of the signal, thus enabling regeneration and subtraction.

The calculation for the estimate of an interfering signal can be represented in the form

$$\hat{I}_{Nd} = \hat{S}_n \Sigma \hat{x}_{n,k} \hat{q}_{m,n}(t-kT)g_{CRC}, \tag{5}$$

in which $g_{CRC}$ is the error detection calculated for the interfering signal, which may obtain the value 1 or 0 depending on whether the signal contains errors or not.

More generally, certain error-detecting codes can also indicate the number of errors in the signal and roughly their location in the signal. This information can then be used in interference cancellation. Methods using the reliability of the signal calculate for instance the BPSK during signalling,

$$\hat{I}_{Nd} = \hat{S}_n \Sigma (Pr(x_{n,k}|r) - Pr(-1*x_{n,k}|r) \hat{q}_{n,k}(t-kT)$$

in which $Pr(x|r)$ is the a posteriori likelihood calculated for symbol $x$. This can be calculated for instance in known Maximum A Posteriori or Maximum Likelihood channel decoders for each channel symbol. If the reliability of the signal is high, then $Pr(x=1|r)\sim 1$ and $Pr(x=-1|r)\sim 0$ making the subtraction of the signal of the user in question from the others very efficient. However, it is possible that the above-mentioned a posteriori likelihoods are low in the channel decoders even though the signal has been decoded without errors. In such a case, a signal that has passed the error detection can be re-coded (regenerated) and subtracted completely with coefficients 1 or -1. Thus, in this, error detection coding makes interference cancellation and decoding of the signals of other users more efficient in a multistage receiver.

On the other hand, the reliability of interference cancellation is not only dependent on the quality of the symbols but also on the channel estimate related to the symbol. In a receiver of the invention, the channel of a signal that has passed the detection can be re-estimated by using regenerated symbols, such as pilot, reference and teaching symbols, i.e. symbols that have gone through the channel and whose values are known in advance. This produces additional energy for the channel estimation. This results in more exact channel estimates and complete symbol decisions, and the reliability of interference cancellation can be further improved.

The method can in a simple way be applied by for instance detecting and decoding the symbols of all dominant interfering signals and performing error detection on the signals by using for instance a CRC code. After this, the interfering signals that have been received without errors are regenerated and subtracted from the received output. If the error detection of all signals indicates that there are no errors, interference can be removed almost completely, but if all signals have errors, almost no interference cancellation is done. In the latter case, it is possible to apply an interference cancellation method which uses a known multistage confidence coefficient. The above-mentioned soft interference cancellation is performed at the first stage, after which error detection is performed and as a result of it, the soft decisions are replaced with a regenerated signal, if the signal has passed the error detection. However, typically some of the signals pass the detection and some do not, which means that the method enables an efficient formation of interference cancellation groups that has conventionally been done only on the basis of the reception power. The method can thus be used to make conventional interference cancellation methods more efficient, for instance in that the receiver requires less signal regeneration, which in turn reduces computation. On the other hand, it is possible to avoid a situation where an interference calculated on the basis of a defective signal is subtracted from the desired signal, leading in fact to an increase in interference. In the solution of the invention, the operation of the receiver varies automatically between the operation of a single user receiver and an interference cancellation receiver (which possibly uses confidence coefficients) depending on the error detection calculated at each moment of time.

The method of the invention can thus also be applied to a multistage receiver structure in which an interference cancellation method of the invention utilizing error detection is applied at the first stage or at a later stage. In interference cancellation, the different stages may contain a different number of signals. The number of signals can also vary dynamically within the iterations. The signals are thus not classified or selected for interference cancellation in a fixed way nor on the basis of the signal power.

Various methods known to those skilled in the art can be applied to error detection. To reduce the effect of interference caused by the transmission path, a digital signal is coded to improve the reliability of the transmission link. It is then possible to detect the errors caused by interference in the transmitted signal. Known and used coding methods include block coding and convolution coding.

In block coding, the bits to be coded are grouped in blocks after which parity bits are added with which the validity of the bits in the preceding block can be checked.

A typical coding method used in cellular radio applications is convolution coding which is suitable for a fading channel. In convolution coding, the parity bits are among the data bits to make the coding continuous. The data bits are not grouped in blocks, nor are the parity bits associated with the preceding data bits, but they are distributed within a bit group of certain length, and this quantity of bits is called the coding depth of convolution coding.

It is essential for the present invention that defective signals or frames can be detected in the receiver with the help of the used coding.

Figure 2 is a block diagram illustrating the structure of a receiver of the invention. The receiver of the invention shown in the figure comprises an antenna 200 by means of which the received signal is fed to radio frequency parts 202 in which the radio frequency signal is transferred onto an intermediate frequency. From the radio frequency parts, the signal is fed to an analogue/digital converter 204 in which the received analogue signal is converted to digital format. The converted signal 206 is fed on to detection means 208 in which estimates of the received signal are detected for the received symbols. The detected symbols are decoded in decoding means 210. At the same time, the decoding of the error-detecting code takes place. Error detection means 212 perform error detection, i.e. check whether the signal frames contain errors. Interference cancellation is performed in interference cancellation means 214 by regenerating the error-free frames and subtracting them from the desired signal. The receiver structure presented here is a simplified form of the actual receiver, which is obvious to those skilled in the art. The receiver to be implemented also comprises other components, such as filters, amplifiers and parallel signal processing paths for different signal components. The facilities of the invention are preferably implemented in the receiver in program form with a processor and a suitable software or with separate components, such as an ASIC processor.

Figure 3 is a block diagram illustrating the structure of a second receiver of the invention. The figure shows a processing branch of a single-user $i$ signal in a CDMA receiver. A digital signal 206 is first fed to a filter 300 adapted to the code, to which data on the spreading code s, of the user in question is imported. In the filter, the signal components are correlated with a known spreading code and a broad-band signal can then be converted into narrow-band format. After this, the signal is fed to a combiner 302 to which data of the channel h, is forwarded. Then the signal is fed to a channel decoder 304 in which the channel decoding and error-detecting code is decoded. The error data is fed to an error detection unit 306 which examines whether the received frame contained errors or not. The error detection unit controls a switch 308 which connects the received frame to interference cancellation. If the frame is valid, it can be used in interference cancellation, and it is fed to regeneration means 310 in which it is regenerated and converted into broad-band format by multiplying it with the spreading code $s_i$ of the user. The regenerated signal is fed to an adder 312 which receives as a second input a received signal 314 of another user $j$ through a delay component 316. In the adder 312, the interference caused by a valid frame can thus be subtracted from the signal 314 of the second user. The cleaned signal is fed on to the filter 318 adapted to the code $s_i$, the combinator 320 and the channel decoder 322.

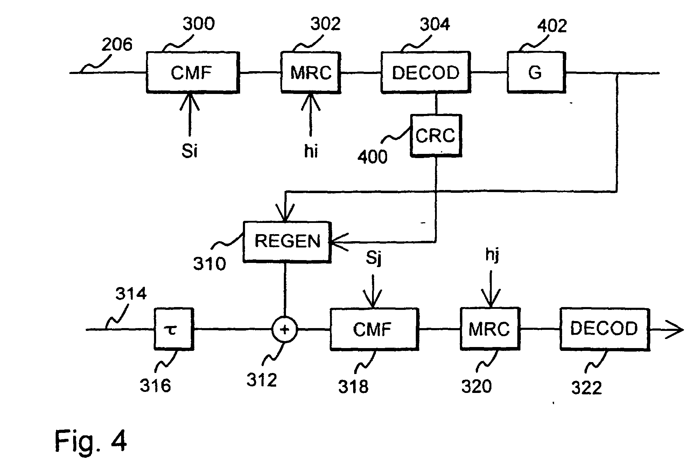

The present invention can naturally be used together with other interference cancellation methods, such as methods using confidence coefficients. This way, the calculations caused by confidence coefficients can be reduced and their accuracy improved for the signals that have been proven valid on the basis of the error detection. This is illustrated in Figure 4 which is a block diagram showing the structure of a third receiver of the invention. This structure greatly resembles the structure shown in Figure 3. In this alternative, the signals that have passed error detection 400 are fed directly to regeneration. For those that have not passed the error detection, a confidence coefficient is calculated in calculation means 402 and the coefficient is utilized in interference cancellation.

For simplicity, the above only presents a case of two signals, but, naturally, there are various signals to be checked and subtracted from each other in an actual receiver. The facilities of the invention are preferably implemented in the receiver in program form with a processor and a suitable software or with separate components, such as an ASIC processor.

Even though the invention has been explained in the above with reference to examples in accordance with the accompanying drawings, it is obvious that the invention is not restricted to them but can be modified in many ways within the scope of the inventive idea disclosed in the attached claims.

**Claims**

1. An interference cancellation method, which method comprises multiple access interference cancellation from a desired signal and in which method a desired signal and group of signals that cause interference to the desired signal are received, which signals are detected and channel-decoded and error detection is performed to the decoded signals and at least some of the interfering signals are regenerated and the regenerated signals are subtracted from the desired signal which is re-detected, wherein the regeneration and subtraction of signals are performed on the basis of the error detection made on the signals,
   **characterized in that** said subtraction is done by:

   forming, at least for one of the interfering signals, a channel estimate by using the regenerated signal,
   weighting the regenerated signal with the channel estimate and
   subtracting the weighted signal from the received signal.

2. A method as claimed in claim 1, **characterized in that** at least one interfering signal received without errors is eliminated from the desired signal.

3. A method as claimed in claim 1 or 2, **characterized in that** the regeneration and subtraction are performed several times sequentially.

4. A method as claimed in any preceding claim, **characterized in that** the method is applied to a multistage receiver.

5. A method as claimed in any preceding claim, **characterized in that** the signals are coded in the transmitting end to detect and correct errors and that the coding is decoded in the receiving end.

6. A method as claimed in claim 5, **characterized in that** some of the signals are regenerated by using an error-correcting code and some by using both an error-correcting code and error detection.

7. A method as claimed in claim 5 or 6, **characterized in that** estimates for which hard decisions are made prior to the regeneration are used in regeneration for signals that are found error-free, and estimates produced by a channel decoder are used in regeneration for signals that are found defective.

8. A method as claimed in any preceding claim, **characterized in that** the signals are in frame format and that the error detection is performed by frame.

9. A method as claimed in claim 5, **characterized in that** convolution coding is used in the transmission of the signals.

10. A method as claimed in claim 5, **characterized in that** block coding is used in the transmission of the signals.

11. A method as claimed in claim 5, **characterized in that** chained coding is used in the transmission of the signals.

12. A method as claimed in claim 5, **characterized in that** turbo coding is used in the transmission of the signals.

13. A receiver of a data transmission system, which receiver comprises means (208) to detect and channel-decode (210) a desired signal and group of signals causing interference to the desired signal,
    means (304, 306) to perform error detection on the signals,
    means (310) to perform regeneration to at least some of the interfering signals and
    means (312) to subtract the regenerated signals from the desired signal and means (306) to control the regeneration and subtraction of the signals on the basis of the error detection made on the signals
    **characterized in that** the receiver is adapted to
    form, at least for one of the interfering signals, a channel estimate by using the regenerated signal,
    weight the regenerated signal with the channel estimate
    and subtract the weighted signal from the received signal.

14. A receiver as claimed in claim 13, **characterized in that** the receiver comprises several receiver stages (304 to 306).

15. A receiver as claimed in claim 13 or 14, **characterized in that** the receiver comprises means (310) to regenerate some of the signals by using an error-correcting code and some by using both an error-correcting code and error detection.

16. A receiver as claimed in any of claims 13 to 15, **characterized in that** the receiver comprises means (304, 306) to perform error detection by frame on signals in frame format.

17. A receiver as claimed in claim 13, **characterized in that** the channel-decoding means (304) are adapted to decode block coding.

18. A receiver as claimed in claim 13, **characterized in that** the channel-decoding means (304) are adapted to decode convolution coding.

19. A receiver as claimed in claim 13, **characterized in that** the channel-decoding means (304) are adapted to decode chained coding.

**Patentansprüche**

1. Interferenzunterdrückungsverfahren, wobei das Verfahren Vielfachzugriffs-Interferenzunterdrückungen von einem gewünschten Signal umfaßt, und wobei bei dem Verfahren ein gewünschtes Signal und eine Gruppe von Signalen, die mit dem gewünschten Signal interferieren, empfangen werden, wobei die Signale dann erkannt und kanaldecodiert werden und für die decodierten Signale eine Fehlererkennung durchgeführt wird, und wobei zumindest einige der Interferenzsignale regeneriert werden und die regenerierten Signale von dem gewünschten Signal subtrahiert werden, welches erneut erkannt wird, wobei die Regenerierung und Subtrahierung von Signalen auf der Grundlage der Fehlererkennung, die für die Signale durchgeführt wurde, durchgeführt wird,
**dadurch gekennzeichnet, daß** die Subtrahierung folgendermaßen ausgeführt wird:

Ausbilden - für zumindest eines der Interferenzsignale - einer Kanalschätzung durch Verwenden des regenerierten Signals,

Gewichten des regenerierten Signals mit der Kanalschätzung und Subtrahieren des gewichteten Signals von dem empfangenen Signal.

2. Verfahren nach Anspruch 1, **dadurch gekennzeichnet, daß** das zumindest eine Interferenzsignal, das ohne Fehler empfangen wird, von dem gewünschten Signal entfernt wird.

3. Verfahren nach einem der Ansprüche 1 oder 2, **dadurch gekennzeichnet, daß** Regenerierung und Subtraktion mehrmals sequentiell durchgeführt werden.

4. Verfahren nach einem der vorhergehenden Ansprüche, **dadurch gekennzeichnet, daß** das Verfahren auf einen Mehrstufenempfänger angewendet ist.

5. Verfahren nach einem der vorhergehenden Ansprüche, **dadurch gekennzeichnet, daß** die Signale im sendenden Ende zum Erkennen und Korrigieren von Fehlern codiert werden, und daß die Codierung im Empfangsende decodiert wird.

6. Verfahren nach Anspruch 5, **dadurch gekennzeichnet, daß** einige der Signale unter Verwendung eines Fehlererkennungscodes und einige unter Verwendung sowohl eines Fehlererkennungscodes als auch von Fehlererkennung regeneriert werden.

7. Verfahren nach einem der Ansprüche 5 oder 6, **dadurch gekennzeichnet, daß** Schätzungen, für die harte Entscheidungen vor der Regenerierung getroffen wurden, bei der Regenerierung für Signale genutzt werden, die als fehlerfrei befunden wurden, und Schätzungen, die durch einen Kanaldecoder erzeugt werden, bei der Regenerierung für Signale genutzt werden, die als fehlerhaft befunden wurden.

8. Verfahren nach einem der vorhergehenden Ansprüche, **dadurch gekennzeichnet, daß** die Signale in Rahmenformat sind, und daß die Fehlererkennung per Rahmen durchgeführt wird.

**9.** Verfahren nach Anspruch 5, **dadurch gekennzeichnet, daß** bei der Übertragung der Signale Faltungscodierung genutzt wird.

**10.** Verfahren nach Anspruch 5, **dadurch gekennzeichnet, daß** bei der Übertragung der Signale Blockcodierung genutzt wird.

**11.** Verfahren nach Anspruch 5, **dadurch gekennzeichnet, daß** bei der Übertragung der Signale verkettete Codierung genutzt wird.

**12.** Verfahren nach Anspruch 5, **dadurch gekennzeichnet, daß** bei der Übertragung der Signale Turbocodierung genutzt wird.

**13.** Empfänger eines Datenübertragungssystems, wobei der Empfänger Mittel (208) zum Erkennen und Kanaldecodieren (210) eines gewünschten Signals und einer Gruppe von Signalen, die mit dem gewünschten Signal interferieren,
Mittel (304, 306) zum Durchführen einer Fehlererkennung für die Signale,
Mittel (310) zum Durchführen einer Regeneration von zumindest einigen der Interferenzsignale und
Mittel (312) zum Subtrahieren der regenerierten Signale von dem gewünschten Signal und
Mittel (306) zum Steuern der Regenerierung und Subtraktion der Signale auf der Grundlage der Fehlererkennung, die für die Signale durchgeführt wird, umfaßt,
**dadurch gekennzeichnet, daß** der Empfänger geeignet ist zum Ausbilden - für zumindest eines der Interferenzsignale - einer Kanalschätzung durch Verwenden des regenerierten Signals,
Gewichten des regenerierten Signals mit der Kanalschätzung und Subtrahieren des gewichteten Signals von dem empfangenen Signal.

**14.** Empfänger nach Anspruch 13, **dadurch gekennzeichnet, daß** der Empfänger mehrere Empfängerstufen (304 bis 306) umfaßt.

**15.** Empfänger nach einem der Ansprüche 13 oder 14, **dadurch gekennzeichnet, daß** der Empfänger Mittel (310) zum Regenerieren einiger der Signale unter Verwendung eines Fehlererkennungscodes und einiger unter Verwendung sowohl eines Fehlererkennungscodes als auch von Fehlererkennung umfaßt.

**16.** Empfänger nach einem der Ansprüche 13 bis 15, **dadurch gekennzeichnet, daß** der Empfänger Mittel (304, 306) zum Durchführen von Fehlererkennung per Rahmen für Signale in Rahmenformat umfaßt.

**17.** Empfänger nach Anspruch 13, **dadurch gekennzeichnet, daß** die Kanaldecodierungsmittel (304) zum Decodieren von Blockcodierung geeignet sind.

**18.** Empfänger nach Anspruch 13, **dadurch gekennzeichnet, daß** die Kanaldecodierungsmittel (304) zum Decodieren von Faltungscodierung geeignet sind.

**19.** Empfänger nach Anspruch 13, **dadurch gekennzeichnet, daß** die Kanaldecodierungsmittel (304) zum Decodieren von verketteter Codierung geeignet sind.

**Revendications**

**1.** Procédé de suppression d'interférence, lequel procédé comprend la suppression d'interférence à accès multiple depuis un signal souhaité et dans lequel procédé un signal souhaité et un groupe de signaux qui causent une interférence au signal souhaité sont reçus, lesquels signaux sont détectés et décodés en canal et la détection d'erreur est effectuée aux signaux décodés et au moins certains des signaux d'interférence sont reconstitués et les signaux reconstitués sont soustraits du signal souhaité qui est redétecté, dans lequel la reconstitution et la soustraction de signaux sont effectués sur la base de la détection d'erreur effectuée sur les signaux, **caractérisé en ce que** ladite soustraction est effectuée par :

la formation, au moins pour un des signes d'interférence, d'une estimation de canal en utilisant le signal reconstitué,

la pondération du signal reconstitué avec l'estimation de canal et

la soustraction du signal pondéré du signal reçu.

**2.** Procédé selon la revendication 1, **caractérisé en ce que** au moins un signe d'interférence reçu sans erreur est éliminé du signal souhaité.

**3.** Procédé selon la revendication 1 ou 2, **caractérisé en ce que** la reconstitution et la soustraction sont effectuées plusieurs fois de manière séquentielle.

**4.** Procédé selon l'une quelconque des revendications précédentes, **caractérisé en ce que** le procédé est appliqué en récepteur multi-étage.

**5.** Procédé selon l'une quelconque des revendications précédentes, **caractérisé en ce que** les signaux sont codés à l'extrémité émission pour détecter et corriger les erreurs et **en ce que** le codage est décodé à l'extrémité réception.

**6.** Procédé selon la revendication 5, **caractérisé en ce que** certains des signaux sont reconstitués en utilisant un code de correction d'erreur et certains en utilisant à la fois un code de correction d'erreur et la détection d'erreur.

**7.** Procédé selon la revendication 5 ou 6, **caractérisé en ce que** les estimations pour lesquelles les décisions dures sont prises avant la reconstitution sont utilisées dans la reconstitution pour les signaux qui sont trouvés dépourvus d'erreur, et les estimations produites par un décodeur de canal sont utilisées dans la reconstitution pour des signaux qui sont trouvés défectueux.

**8.** Procédé selon l'une quelconque des revendications précédentes, **caractérisé en ce que** les signaux sont sous format de trame et **en ce que** la détection d'erreur est effectuée par trame.

**9.** Procédé selon la revendication 5, **caractérisé en ce que** le codage convolutionnel est utilisé dans la transmission des signaux.

**10.** Procédé selon la revendication 5, **caractérisé en ce que** le codage de bloc est utilisé dans la transmission des signaux.

**11.** Procédé selon la revendication 5, **caractérisé en ce que** le codage en chaîne est utilisé dans la transmission des signaux.

**12.** Procédé selon la revendication 5, **caractérisé en ce que** le codage turbo est utilisé dans la transmission des signaux.

**13.** Récepteur d'un système de transmission de données, lequel récepteur comprend des moyens (208) pour détecter et décoder un canal (210) un signal souhaité et un groupe de signaux causant l'interférence au signal souhaité, des moyens (304, 306) pour effectuer une détection d'erreur sur les signaux, des moyens (310) pour effectuer une reconstitution d'au moins certains des signaux d'interférence et des moyens (312) pour soustraire les signaux reconstitués du signal souhaité et des moyens (306) pour commander la reconstitution de la soustraction des signaux sur la base de la détection d'erreur effectuée sur les signaux. **Caractérisé en ce que** le récepteur est adapté pour former, au moins pour un des signaux d'interférence, une estimation de canal en utilisant le signal reconstitué, pondérer le signal reconstitué avec l'estimation de canal et soustraire le signal pondéré du signal reçu.

**14.** Récepteur selon la revendication 13, **caractérisé en ce que** le récepteur comprend plusieurs étages de récepteur (304 à 306).

**15.** Récepteur selon la revendication 13 ou 14, **caractérisé en ce que** le récepteur comprend des moyens (310) pour reconstituer certains des signaux en utilisant un code de correction d'erreur et certains en utilisant à la fois un code de correction d'erreur et de détection d'erreur.

**16.** Récepteur selon l'une quelconque des revendications 13 à 15, **caractérisé en ce que** le récepteur comprend des moyens (304,306) pour effectuer la détection d'erreur par trame sur les signaux sous format de trame.

17. Récepteur selon la revendication 13, **caractérisé en ce que** les moyens de décodage de canal (304) sont adaptés pour décoder le codage de bloc.

18. Récepteur selon la revendication 13, **caractérisé en ce que** les moyens de décodage de canal (304) sont adaptés pour décoder le codage convolutionnel.

19. Récepteur selon la revendication 13, **caractérisé en ce que** les moyens de décodage de canal (304) sont adaptés pour décoder le codage en chaîne.

Fig. 1

Fig. 2

Fig. 3

Fig. 4